# EUROPÄISCHE PATENTSCHRIFT

(11) **EP 0 775 378 B1**
(45) Veröffentlichungstag und Bekanntmachung des Hinweises auf die Patenterteilung: **11.11.1998**
(21) Anmeldenummer: 95925726.2
(22) Anmeldetag: 21.07.1995
(51) Int. Cl.: H02J 7/00

(54) **VORRICHTUNG ZUR AUFLADUNG UND ZUM LADUNGSAUSTAUSCH ZWISCHEN EINER VIELZAHL VON IN REIHE GESCHALTETEN ENERGIESPEICHERN**
DEVICE FOR CHARGING AND TRANSFERRING CHARGE BETWEEN A MULTIPLICITY OF SERIES-CONNECTED ACCUMULATORS
DISPOSITIF DE CHARGE ET DE TRANSMISSION DE CHARGE ENTRE PLUSIEURS ACCUMULATEURS D'ENERGIE SIMILAIRES MONTES EN SERIE

(30) Priorität: 13.08.1994 DE 4428769
(43) Veröffentlichungstag der Anmeldung: 28.05.1997
(73) Patentinhaber: Fraunhofer-Gesellschaft zur Förderung der angewandten Forschung e.V., 80636 München (DE)
(72) Erfinder: SCHMIDT, Heribert, D-79312 Emmendingen (DE)
(74) Vertreter: Rackette, Karl, Dipl.-Phys. Dr.-Ing
(86) Internationale Anmeldenummer: DE9500975
(87) Internationale Veröffentlichungsnummer: WO9605643

(56) Entgegenhaltungen:
- EP-A- 0 432 639
- FR-A- 2 360 203
- US-A- 4 331 911
- US-A- 5 003 244

## Beschreibung

Die Erfindung betrifft eine Vorrichtung zur Aufladung und zum Ladungsaustausch zwischen einer Vielzahl von in Reihe geschalteten und einen Gesamtenergiespeicher bildenden, gleichartigen Energiespeichern.

Eine solche Überwachungsvorrichtung ist aus der US-A-4 331 911 bekannt und dient zum Angleichen von Spannungen einzelner, in Reihe geschalteter Akkumulatoren mit einem DC-DC-Wandler. Der einzige zentrale Wandler für alle Akkumulatoren wird aus der Gesamtbatterie gespeist und er ist nicht fähig, durch Alterung auftretende Besonderheiten einzelner Akkumulatoren zu detektieren.

Bis ein solcher, in seiner Speicherungs- und Ladungsqualität absinkender Akkumulator von der Überwachungseinrichtung für Akkumulatoren erkannt wird, führt sein Fehlverhalten zu einer Kette von Reaktionen in der Gruppe der Akkumulatoren, was zu einer Degradation auch der anderen Akkumulatoren führt.

In der DE-PS 30 31 931 ist eine Vorrichtung zur Verlängerung der Entladungsdauer von wiederaufladbaren Akkumulatoren beschrieben, bei der mit einer Überwachungseinrichtung die Spannungszustände der Akkumulatoren erfaßt werden. Es wird eine längere betriebssichere Entladung der Akkumulatoren dadurch bewirkt, daß der Akkumulatorbetrieb nicht bei Entladung und damit bei Erreichen einer Grenzspannung der schwächsten Zelle beendet wird, sondern erst, wenn diese Grenzspannung im Mittel aller zusammengeschalteten Akkumulatoren erreicht wird. Eine Verlängerung der Standzeit von Akkumulatoren im Hinblick auf ihre Auswechslung läßt sich damit nicht erreichen.

Aus der SU 1 065 959 ist eine Vorrichtung für ein Akkumulatorladegerät bekannt, mit der das Überladen und das Laden mit Falschpolung von Akkumulatoren verhindert wird. Dabei wird der Ladestrom über eine Transistorschaltung überwacht, die weiterhin Zenerdioden umfaßt. Diese Schutzschaltung kann jedoch weder die Überwachung der Qualität der Akkumulatoren gewährleisten, noch eine längere Standzeit von in ihrer Qualität schlechter werdenden Akkumulatoren bewirken.

Aus der EP 0 432 639 A2 der Anmelderin ist eine Überwachungseinrichtung für eine Vielzahl von in Reihe geschalteten, gleichartigen Akkumulatoren bekannt, bei der mit Hilfe einer Steuerschaltung ein elektrischer Speicher parallel zu einem der Akkumulatoren zugeschaltet wird, wobei die Primärwicklung eines Transformators in Reihe mit einem an die Steuerschaltung angeschlossenen Unterbrecher parallel zu den Polen der Gruppe von Akkumulatoren verbunden ist. Dabei wird der elektrische Speicher jeweils aus der Sekundärwicklung gebildet, die über jeweils eine sperrende Diode mit jedem Akkumulator verbunden ist. Über eine Vergleichsschaltung wird bei Auftreten eines Differenzsignals in der Steuerschaltung zwischen den Akkumulatoren ein Funktionsgenerator angeschaltet, dessen Ausgang mit dem Unterbrecher verbunden ist. Damit kann gezielt dem schwächsten Akkumulator Energie zugeführt werden. Diese Anlage weist für kleine Anwendungen den Nachteil einer Vielzahl von steuernden Elementen auf, die einen Kosten- und ggf. einen Raum- und Gewichtsfaktor darstellen. Zugleich ist neben dem erheblichen Aufwand für die Selektion der jeweiligen schwachen oder starken Zelle der Leistungsbereich der jeweils eingesetzten Sperrwandler nach oben begrenzt

Alle diese Vorrichtungen weisen den Nachteil auf, daß zur Aufladung der Energiespeicher, bei denen es sich zB. um Batteriebänke eines Elektrofahrzeugs handeln kann, ein externes Ladegerät vorgesehen sein muß, welches wiederum in einem solchen Fahrzeug Platz einnimmt und zusätzliches Gewicht ausmacht.

Ausgehend von diesem Stand der Technik liegt der Erfindung die Aufgabe zugrunde, eine Vorrichtung der eingangs genannten Art zu schaffen, bei dem neben der Verzögerung des Austausches eines in seiner Qualität schlechteren Akkumulators mit einem geringen Schaltungsaufwand auch die Aufladung der Energiespeicher bewirkt werden kann.

Diese Aufgabe wird erfindungsgemäß mit einer Vorrichtung gemäß den Merkmalen des Anspruchs 1 bzw. den Merkmalen des Anspruchs 2 gelöst.

Vorzugsweise wird der Taktgeber von einer Ablaufsteuerschaltung angesteuert, die über eine Aktivierschaltung für einen vorbestimmbaren oder von einer angeschalteten Last bestimmten Zeitraum eingeschaltet ist.

Nachfolgend werden mehrere Ausführungsbeispiele der Erfindung anhand der Zeichnung näher erläutert. Es zeigen:
- Fig. 1: ein Schaltbild einer Vorrichtung zur Aufladung und zum Ladungsausgleich für vier Akkumulatoren gemäß einem ersten Ausführungsbeispiel,
- Fig. 2: ein Schaltbild einer weiteren Vorrichtung zur Aufladung und zum Ladungsausgleich für drei Akkumulatoren gemäß einem zweiten Ausführungsbeispiel, und
- Fig. 3: ein Schaltbild einer weiteren Vorrichtung zur Aufladung und zum Ladungsausgleich für zwei Akkumulatoren gemäß einem dritten Ausführungsbeispiel.

Es sind natürlich eine Vielzahl von Realisierungsmöglichkeiten von Schaltungen zur Durchführung des Verfahrens möglich, von denen in der Folge mehrere dargestellt werden. Die Vorrichtung ist z.B. bei einer Vorrichtung zum Ladungsausgleich gemäß der EP 0 432 639 A2 der Anmelderin integrierbar. Weiterhin kann sie auch bei der DE 44 22 409 eingesetzt werden, um mit einer geringen Anzahl von zusätzlichen Bauteilen ein kombiniertes Ladungsausgleich- und Ladegerät zu bilden.

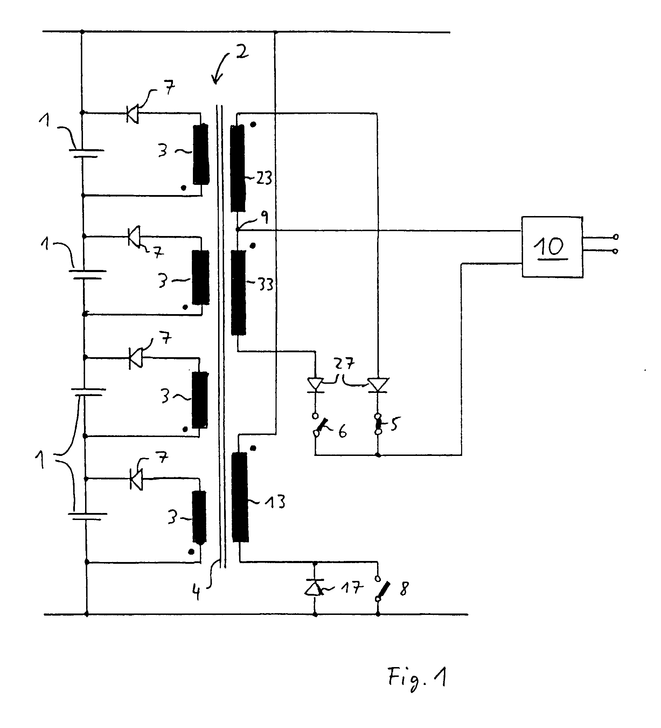

Die Fig. 1 zeigt ein Schaltbild einer Vorrichtung zur Aufladung und zum Ladungsausgleich für vier Akkumulatoren 1 gemäß einem ersten Ausführungsbeispiel. Diese können eine einzelne Gruppe von vier Akkumulatoren 1 bilden oder Teile einer größeren, z.B. 10 bis 12 Akkumulatoren 1 umfassenden Batteriebank sein.

Es ist ein Transformator 2 vorgesehen, der über hier vier gleiche Wicklungen 3 verfügt, die alle im gleichen durch den Punkt angedeuteten Richtungssinn auf einem gemeinsamen Kern 4 in enger magnetischer Kopplung angeordnet sind.

Dabei ist hier jeweils eine einen Energiespeicher bildende Wicklung 3 einem Akkumulator 1 zugeordnet, wobei jede Wicklung 3 in Reihe mit einer Diode 7 zu dem Akkumulator 1 parallel geschaltet ist.

Weiterhin ist eine Zusatzwicklung 13 mit gegenüber den Wicklungen 3 umgekehrtem Wicklungssinn vorgesehen, die in Reihe mit einer parallel angeordneten Kombination eines Schalters 8 und einer Diode 17 zu der Gesamtbatteriebank zugeschaltet ist.

Darüberhinaus sind auf dem Kern 4 zwei weitere Speisewicklungen 23 und 33 mit gleichem Wicklungssinn vorgesehen, die über einen Mittelabgriff 9 an dem Netzausgang positiver Spannung eines Netzgleichrichters 10 angeschlossen sind. Die anderen Wicklungsenden der Speisewicklungen 23 und 33 sind jeweils in Reihe mit einer Diode 27 und Schaltern 5 bzw. 6 an dem Netzausgang negativer Spannung des Netzgleichrichters 10 angeschlossen. Der Netzgleichrichter 10 wird z.B. aus dem üblichen Wechselspannungsnetz 11 gespeist und erzeugt sekundärseitig eine Zwischenkreisspannung.

In der Ladephase werden die Wicklungen 23 und 33 nun mit Hilfe von den Schaltern 5 und 6 mit einem Tastverhältnis von weniger als 50 Prozent abwechselnd mit den Polen des Netzgleichrichters 10 verbunden. Die Schalter 5 und 6 sind in demjenigen Taktschritt dargestellt, in dem der Schalter 5 geschlossen ist, so daß die Wicklung 23 mit der von dem Netzgleichrichter 10 erzeugten Zwischenkreisspannung beaufschlagt ist. Im nächsten, nicht dargestellten Taktschritt schließt dann der Schalter 6, während der Schalter 5 offen ist, so daß die Wicklung 33 von der Zwischenkreisspannung beaufschlagt wird.

Der Schalter 8 ist dabei, wie in der Fig. 1 dargestellt, offen. Damit arbeitet die Vorrichtung als Durchflußwandler. Während der Schließphase von Schalter 5 wird durch die Speisewicklung 23 in den Wicklungen 3 eine Spannung derart induziert, daß die Dioden 7 leitend werden und ein Strom jeweils direkt in die Akkumulatoren 1 fließt. Dabei fließt der größere Anteil des Stromes in die Zelle mit der niedrigsten Spannung, so daß parallel zu dem Laden ein direkter Ausgleich der Ladespannungen beim Ladevorgang auftritt.

Während der Schließphase von Schalter 6 wird durch die Speisewicklung 33 in der Wicklung 13 eine Spannung induziert, so daß die Diode 17 leitend wird und ein Strom in die Gesamtbatterie fließt.

Die Schalter 5 und 6 sind jeweils mit entsprechenden Ausgängen eines Taktgebers verbunden, der in der Zeichnung nicht dargestellt ist und mit dem eine Taktfrequenz von vorzugsweise mehr als 20 kHz erzeugbar ist.

Es wird in zwei Taktschritten einmal bei geschlossenem Schalter 6 die Gesamtbatterie geladen und bei geschlossenem Schalter 5 über die Wicklungen 3 jeder einzelne Akkumulator 1 aufgeladen. Bei entsprechender Dimensionierung der genannten Wicklungen wird ungefähr die eine Hälfte der Energie direkt in die Gesamtbatterie eingespeist und die andere Hälfte fließt über die Wicklungen 3 und die Dioden 7 in die einzelnen Akkumulatoren 1.

Durch die enge magnetische Kopplung wird in allen Wicklungen 3, also insbesondere in den hier dargestellten vier Wicklungen 3 die gleiche Spannung induziert. Weist nun ein Akkumulator 1 durch Alterung oder sonstige Einflüsse eine niedrigere Spannung aus, so fließt direkt ein entsprechender Strom in diese Zelle.

Wenn der Aufladungsvorgang abgeschlossen ist, sind die Schalter 5 und 6 offen und der Netzgleichrichter 10 wird vom Netz getrennt. Dann wird mit Hilfe einer Ablaufsteuerung die Vorrichtung als Sperrwandler betrieben. Dabei ist eine Aktivierschaltung vorgesehen, die durch eine Vielzahl von Ereignissen je nach Einsatzzweck ausgelöst werden kann. Dabei kann es sich um einen einfachen manuellen Ein-/Aus-Schalter handeln, der z.B. durch das Äquivalent eines Zündschlosses bei einem akkumulatorgetriebenen Fahrzeug gebildet sein kann.

Die Schaltung kann auch einen Spannungskomparator aufweisen, der einen Schaltimpuls an den Ausgang der Schaltung weitergibt, wenn der Absolutwert der Batteriespannung innerhalb oder besser außerhalh vorbestimmter Werte liegt. Diese könnten z.B. bei einem Blei-Akkumulator 1 bei einer Spannung von größer als 2,2 Volt oder kleiner als 1,95 Volt liegen. Eine Spannung eines Akkumulators 1 außerhalb dieser Werte läßt auf einen Ladungs- oder Entladungsvorgang schließen, bei dem der Ladungsausgleich vonstatten gehen sollte.

Es könnte auch ein Detektor vorgesehen sein, mit dem eine Dynamik des Batteriespannung nachweisbar ist, die auf schnelle Lastwechsel hindeutet, wie diese beim Betrieb eines Elektrofahrzeugs auftreten. Weiterhin könnte auch das Abweichen der Spannung einzelner Akkumulatoren 1 von einem momentanen Mittelwert des Gesamtsystems als Auslöser für die Aktivierschaltung vorgesehen sein. Schließlich kann die Schaltung zum Ladungsausgleich z.B. auch periodisch, z.B. alle 3 Stunden, anlaufen.

Wenn die Aktivierschaltung einen Startimpuls nach einer der vorgenannten Bedingungen erzeugt, die einzeln aber auch zu mehreren geprüft werden können, steuert dieser beispielsweise einen Monoflop an, der für eine vorbestimmte Zeitdauer, z.B. eine halbe Stunde, die Vorrichtung zum Ladungsaustausch anstellt, oder diese Zeitdauer wird durch ein Merkmal der angeschalteten Last festgelegt Die Vorrichtung wird durch eine Logikeinheit überwacht, der weitere Signale zur Detektion eines Überstromes in oder einer Übertemperatur von Bauteilen wie Transistoren oder Wicklungen zugeführt werden. Diese Schaltung kann auch einen Ausgang für eine Anzeige für Status- oder Steuersignale aufweisen, z.B. für einen Lastabwurf. Diese Logikeinheit steuert den genannten Taktgenerator hoher Taktfrequenz an, an dessen Ausgang der Steuereingang des Schalters 8 angeschlossen wird.

Bei einer Funktion der Vorrichtung zum Ladungsausgleich wird der Schalter 8 mit hoher Taktfrequenz von einigen kHz geöffnet und geschlossen, wodurch Energie aus der Gesamtbatterie entnommen und der schwächsten Einzelzelle zugeführt wird.

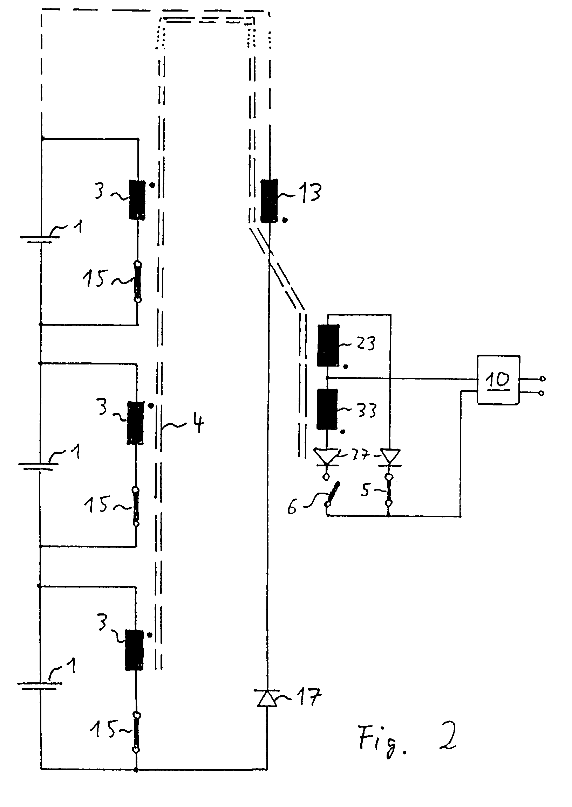

Die Fig. 2 zeigt ein Schaltbild einer weiteren Vorrichtung zur Aufladung und zum Ladungsausgleich für drei Akkumulatoren 1 gemäß einem zweiten Ausführungsbeispiel. Gleiche Merkmale sind in allen Fig. mit gleichen Bezugszeichen versehen.

Bei dieser Schaltung beaufschlagt das Steuersignal des Taktgebers, mit dessen Hilfe in den zwei Taktschritten abwechselnd die Schalter 5 und 6 geschlossen werden, weitere Schalter 15, die jeweils in Reihe zu den Wicklungen 3 geschaltet sind. Diese Schalter 15 sind in dem Taktschritt, in dem der Schalter 5 geschlossen ist, ebenfalls geschlossen und schalten die Wicklungen 3 parallel zu den Akkumulatoren 1. Damit kann jeweils die von dem Netzgleichrichter 10 gelieferte Energie über die Speisewicklung 23 in den Wicklungen 3 induziert werden, die einen Ladestrom für die einzelnen Akkumulatoren 1 abgeben.

Wenn dagegen der Schalter 6 geschlossen ist, so öffnet der Taktgeber die Schalter 15, so daß über die Speisewicklung 33 eine Spannung in der Wicklung 13 induziert wird und so die Gesamtbatterie aufgeladen wird.

Die Vorrichtung gemäß Fig. 2 arbeitet dann als Schaltung zum Ladungsausgleich, wenn beide Schalter 5 und 6 geöffnet sind und mit Hilfe desselben oder eines weiteren Taktgebers nur die Schalter 15 geöffnet und geschlossen werden.

Die Wicklungen 3 sind alle im gleichen Richtungssinn an die Akkumulatoren 1 angeschaltet, wobei für die zweite Taktperiode mit offenen Schaltern 15 die für alle Akkumulatoren 1 gemeinsam wirkende Entmagnetisierungswicklung 13 vorgesehen ist, die über eine Diode 17 über die Gesamtbatterie geschaltet wird.

Der eigentliche Ladungsaustausch findet hier in der Einschaltphase in der ersten Taktperiode statt. Diese kann hei geeigneter Wahl der Wicklungen 3 und 13 auch über 50% eines Taktes ausmachen, da die Entmagnetisierung rasch erfolgen kann.

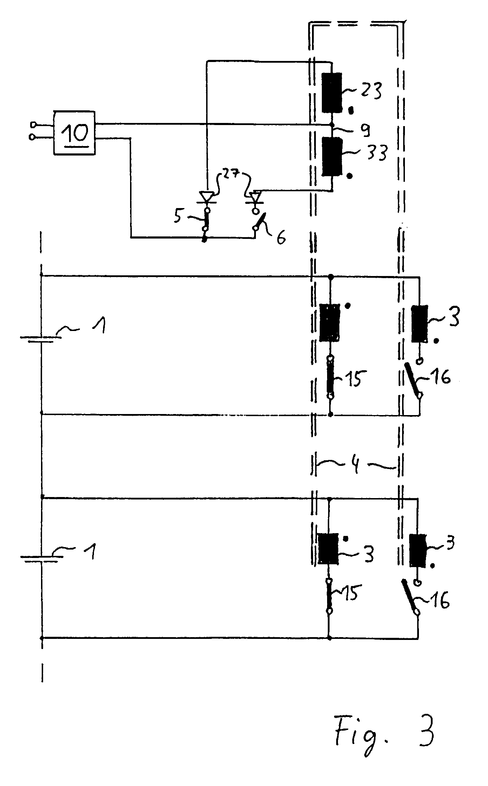

Die Fig. 3 zeigt ein Schaltbild einer weiteren Vorrichtung zum Ladungsausgleich für in diesem Ausschnitt dargestellte zwei Akkumulatoren 1 gemäß einem dritten Ausführungsbeispiel. Es sind zwei in Reihe geschaltete Akkumulatoren 1 dargestellt, die Teil einer eine Vielzahl von Akkumulatoren beinhaltenden Batteriebank sind. Jedem der Akkumulatoren 1 sind zwei Wicklungen 3 mit unterschiedlichem Wicklungssinn zugeordnet. Diese Wicklungen 3 mit jeweils bezüglich ihrer Anschaltung an den Akkumulator 1 unterschiedlichem Wicklungssinn sind in Reihe mit jeweils einem Schalter 15 bzw. 16 verbunden. Die Wicklungen 3 sind auf einem gemeinsamen Kern 4 angeordnet.

Durch das aufeinanderfolgende Schließen der Schalter 15 bzw. 16 in einem Tastverhältnis von z.B. etwas weniger als 50% wird jeweils jede der beiden einem Akkumulator 1 zugeordnete Wicklung 3 mit dem Akkumulator 1 parallel verbunden, wobei jeweils alle Akkqmulatoren virtuell parallel geschaltet sind, so daß in jedem Schritt ein Ladungsausgleich stattfindet und ein Strom in den schwächsten Akkumulator 1 fließt

Weiterhin verfügt die Vorrichtung über die Speisewicklungen 23 und 33 auf dem gemeinsamen Kern 4, die in einer zu den anderen Ausführungsbeispielen analogen Weise an dem Netzgleichrichter 10 angeschlossen sind. Bei einem Ladebetrieb sind nun die Schalter 5 und 15 bzw. 6 und 16 gemeinsam geschlossen oder geöffnet. Die Schalter 5 und 15 bzw. die Schalter 6 und 16 werden jeweils synchron betrieben. Damit wird bei geschlossenem Schalter 5 über die Speisewicklung 23 eine Spannung in den Wicklungen 3 induziert, die über die Schalter 15 gerade zu den Akkumulatoren 1 parallel geschaltet sind.

## Patentansprüche

1. Vorrichtung zur Aufladung und zum Ladungsaustausch zwischen einer Vielzahl von in Reihe geschalteten und einen Gesamtenergiespeicher bildenden, gleichartigen Energiespeichern (1), bei der als elektrische Speicher zu jedem Energiespeicher (1) eine Wicklung (3) eines energiespeicherfähigen Transformators (2) über einen ansteuerbaren Schalter (15) oder eine Diode (7) parallel liegt, eine Lade- bzw. Speisewicklung (23, 33) vorgesehen ist, eine weitere Wicklung (13) über einen weiteren ansteuerbaren Schalter (8) oder eine Diode (17) zum Gesamtenergiespeicher parallel geschaltet ist, und bei der im Ladebetrieb die Speisewicklung (23, 33) mittels ansteuerbaren Speisewicklungsschaltern (5, 6) eine Spannung mit taktweise wechselnder Polarität erhält, so daß im ersten Taktschritt jeder Energiespeicher (1) über die Wicklungen (3) transformatorisch geladen wird und im zweiten Taktschritt der Gesamtenergiespeicher über die weitere Wicklung (13) geladen wird und bei der weiterhin im Ladungsaustauschbetrieb die Speisewicklung (23, 33) abgeschaltet ist und entweder die Wicklungen (3) in einem Taktschritt mittels der weiteren Wicklung (13) aus dem Gesamtenergiespeicher geladen werden und im zweiten Taktschritt ihre Energie an ihre zugeordneten Energiespeicher abgeben oder mittels Zuschaltung einer Anzahl von Wicklungen (3) in einem Taktschritt eine induktive Parallelschaltung derselben bewirkt wird, wobei im zweiten Taktschritt über die weitere Wicklung (13) eine Entmagnetisierung des Transformators erfolgt und zur Ansteuerung aller ansteuerbaren Schalter (5, 6, 8, 15) ein Taktgeber vorgesehen ist.

2. Vorrichtung zur Aufladung und zum Ladungsaustausch zwischen einer Vielzahl von in Reihe geschalteten und einen Gesamtenergiespeicher bildenden, gleichartigen Energiespeichern (1), bei der zu jedem Energiespeicher (1) zwei entgegengesetzt gepolte Wicklungen (3) eines Transformators über zugehörige ansteuerbare Schalter (15, 16) parallel liegen und eine Lade- oder Speisewicklung (23, 33) vorgesehen ist, bei der im Ladebetrieb die Speisewicklung (23, 33) mittels ansteuerbaren Speisewicklungsschaltern (5, 6) eine Spannung mit taktweise wechselnder Polarität erhält und über die Wicklungen (3) durch synchrones alternatives Ansteuern ihrer zugehörigen ansteuerbaren Schalter (15, 16) die Energiespeicher (1) geladen werden und im Ladungsaustauschbetrieb die Speisewicklung (23, 33) abgeschaltet ist und die Energiespeicher (1) über die Wicklungen (3) durch synchrones alternatives Ansteuern ihrer zugehörigen ansteuerbaren Schalter (15, 16) induktiv parallel geschaltet werden und zur Ansteuerung aller ansteuerbaren Schalter (5, 6, 15, 16) ein Taktgeber vorgesehen ist.

3. Vorrichtung nach einem der Ansprüche 1 oder 2, dadurch gekennzeichnet, daß der Taktgeber von einer Ablaufsteuerschaltung ansteuerbar ist, die über eine Aktivierschaltung für einen vorbestimmbaren oder von einer angeschalteten Last bestimmten Zeitraum einschaltbar ist.

## Claims

1. Device for charging and for making a charge exchange between a large number of energy storage devices (1) of the same kind, connected in series and forming a total energy storage device, on which device one coil (3) of a transformer (2) which is capable of storing energy lies as an electrical storage device parallel to each energy storage device via a switch (15) which may be triggered or a diode (7), a charging or feed coil (23, 33) is provided, a further coil (13) is connected in parallel via a further switch (8) which may be triggered or a diode (17) to the overall energy storage device, and on which, during the charging operation, the feed coil (23, 33) receives a voltage with polarity alternating in cycles by means of feed coil switches which may be triggered(5, 6), such that, in the first cycle step, each energy storage device (1) is charged via the coils (3), and in the second cycle step the total energy storage device is charged via the additional coil (13), and on which, furthermore, during the charge exchange operation, the feed coil (23, 33) is switched off and either the coils (3) are charged in one cycle step by means of the additional coil (13) from the total energy storage device, and in a second cycle step release their energy to the energy storage devices associated with them, or by means of the interpolation of a number of coils (3) in one cycle step an inductive parallel connection of the same is effected, demagnetisation of the transformer taking place in the second cycle step via the additional coil (13) and a clock unit being provided to trigger all the switches which may be triggered (5, 6, 8, 15).

2. Device for charging and for making a charge exchange between a large number of energy storage devices (1) of the same kind which are connected in series and form a total energy storage device, on which two coils (3), with opposite polarity, of a transformer lie parallel to each energy storage device (1) via associated switches (15, 16) which may be triggered and a charging or feed coil (23, 33) is provided on which, during the charging operation, the feed coil (23, 33) receives a voltage with polarity alternating in cycles by means of feed coil switches (5, 6) which may be triggered and the energy storage devices (1) are charged via the coils (3) by synchronous alternative triggering of the switches (15, 16) associated with them which may be triggered, and, during the charging exchange operation, the feed coil (23, 33) is switched off and the energy storage devices (1) are connected inductively in parallel by synchronous alternative triggering of the switches (15, 16) associated with them which may be triggered and associated with them and a clock unit is provided to trigger all the switches (5, 6, 15, 16) which may be triggered.

3. Device according to one of claims 1 or 2,
characterised in that
the clock unit may be triggered by a sequencing circuit which may be switched on by an activating circuit for a period of time which may be pre-determined or is determined by a connected load.

## Revendications

1. Dispositif chargeur et d'échange de charge entre une pluralité d'accumulateurs d'énergie (1) de même espèce, qui sont mis en série et constituent un accumulateur d'énergie total, dans lequel un bobinage (3) d'un transformateur (2), apte à accumuler de l'énergie, est mis en parallèle, comme accumulateur électrique, à chacun desdits accumulateurs d'énergie (1) via un commutateur (15) commandable ou une diode (7); un bobinage chargeur ou d'alimentation (23, 33) est disposé, un autre bobinage (13) est mis en parallèle audit accumulateur d'énergie total via un autre commutateur commandable (8) ou une diode (17), et dans lequel en service de chargement ledit bobinage d'alimentation (23, 33) entretient une tension à polarité périodiquement alternante moyennant des commutateurs commandables (5, 6) de bobinage d'alimentation, de façon qu'au premier pas de cycle chacun desdits accumulateurs d'énergie (1) soit chargé à transformation via lesdits bobinages (3) et au premier pas de cycle ledit accumulateur d'énergie total soit chargé via ledit autre bobinage (13), et dans lequel de plus, en service d'échange de charge, ledit bobinage d'alimentation (23, 33) soit mis hors circuit et soit lesdits bobinages (3) soient chargé en un pas de cycle moyennant ledit autre bobinage (13) à partir dudit accumulateur d'énergie total et dégagent leur énergie aux accumulateurs d'énergie y affectés au deuxième pas de cycle, soit à un pas de cycle un nombre de bobinages (3) soit mis en circuit afin de les brancher en parallèle de façon inductive, à désaimantation dudit transformateur étant causé au deuxième pas de cycle via ledit autre bobinage et à un générateur d'impulsions étant disposé à commander tous les commutateurs commandables (5, 6, 8, 15).

2. Dispositif chargeur et d'échange de charge entre une pluralité d'accumulateurs d'énergie (1) de même espèce, qui sont mis en série et constituent un accumulateur d'énergie total, dans lequel deux bobinages (3) à polarité opposée d'un transformateur (2) sont mis en parallèle via des commutateurs (15, 16) commandables y affectés, et un bobinage chargeur ou d'alimentation (23, 33) est disposé, dans lequel en service de chargement ledit bobinage d'alimentation (23, 33) entretient une tension à polarité périodiquement alternante moyennant des commutateurs (5, 6) commandables de bobinage d'alimentation et lesdits accumulateurs d'énergie (1) sont chargés via lesdits bobinages (3) par commande alternative synchronisée desdits commutateurs commandables (15, 16) y affectés, pendant qu'en service d'échange de charge ledit bobinage d'alimentation (23, 33) est mis hors circuit et lesdits accumulateurs d'énergie (1) sont branchés en parallèle de façon inductive via lesdits bobinages (3) par commande alternative synchronisé des commutateurs commandables (15, 16) y affectés, et dans un générateur d'impulsions est disposé à commander tous les commutateurs commandables (5, 6, 8, 15).

3. Dispositif selon une quelconque des revendications 1 ou 2, caractérisé en ce que ledit générateur d'impulsions est commandable par un circuit de commande séquentielle qui est approprié à être mis en circuit par un circuit activateur pour une période prédestinable ou pour une période définie par une charge raccordée.
